# EUROPÄISCHE PATENTSCHRIFT

(11) **EP 3 847 713 B1**
(45) Veröffentlichungstag und Bekanntmachung des Hinweises auf die Patenterteilung: **15.12.2021**
(21) Anmeldenummer: 19787134.6
(22) Anmeldetag: 03.10.2019
(51) Int. Cl.: H01M 10/613, H01M 10/643, H01M 10/6557, H01M 10/6567

(54) **KÜHLVORRICHTUNG FÜR ZU EINEM MODUL ZUSAMMENGESETZTE BATTERIEZELLEN**
COOLING DEVICE FOR BATTERY CELLS ASSEMBLED INTO A MODULE
DISPOSITIF DE REFROIDISSEMENT POUR DES CELLULES DE BATTERIE ASSEMBLÉES EN UN MODULE

(30) Priorität: 15.11.2018 AT 510062018
(43) Veröffentlichungstag der Anmeldung: 14.07.2021
(73) Patentinhaber: Raiffeisenlandesbank Oberösterreich Aktiengesellschaft, 4020 Linz (AT)
(72) Erfinder: MENZL, Kilian, 4020 Linz (AT); BERGER, Bernhard Maximilian, 4240 Freistadt (AT); PUMSLEITNER, Johannes, 3352 St. Peter/Au (AT); KREGL, Philipp, 4292 Kefermarkt (AT); DOBUSCH, Peter, 4264 Grünbach (AT)
(74) Vertreter: Hübscher & Partner Patentanwälte GmbH
(86) Internationale Anmeldenummer: PCT/AT2019/060325
(87) Internationale Veröffentlichungsnummer: WO 2020/097638

(56) Entgegenhaltungen:
- WO-A2-03/103083
- DE-A1-102015 219 280
- US-A- 4 913 985
- US-A1- 2016 172 727

## Beschreibung

### Technisches Gebiet

Die Erfindung bezieht sich auf eine Kühlvorrichtung für zu einem Modul zusammengesetzte Batteriezellen, mit einem Grundkörper und einem Einsatz, der Aufnahmen für einen Endabschnitt der Batteriezellen unter Aussparung des Zellenkopfes aufweist, wobei der Einsatz gemeinsam mit dem Grundkörper einen Strömungskanal für ein Temperierfluid begrenzt.

### Stand der Technik

Insbesondere im Zusammenhang mit zylindrische Batteriezellen umfassenden Batteriemodulen sind aus dem Stand der Technik Kühlvorrichtungen bekannt (DE 102006010063 A1), die einen Grundkörper und einen Einsatz mit Aufnahmen für die einzelnen Batteriezellen aufweisen, wobei der Grundkörper gemeinsam mit dem Einsatz einen Strömungskanal für ein Temperierfluid begrenzt. Die Aufnahmen sind dergestalt, dass diese einen Endabschnitt der Batteriezellen unter Aussparung des Zellenkopfes jeweils umfangsseitig umschließen. Damit ein Abführen der betriebsbedingt anfallenden, durch die Batteriezellen generierte Verlustwärme ermöglicht wird, ist in der DE 102006010063 A1 vorgesehen, dass lediglich der Zellenboden in unmittelbarem thermischen Kontakt mit dem Temperierfluid steht. Zu diesem Zweck weisen die Aufnahmen zellenbodenseitig in Richtung Strömungskanal eine Durchtrittsöffnung für die darin eingesetzten Batteriezellen auf, sodass der Zellenboden, beispielsweise mittels am Strömungskanalgrund vorgesehener Abstützrippen für die Batteriezellen, zumindest teilweise in Kontakt mit dem Temperierfluid gehalten werden kann. Nachteilig ist daran allerdings, dass aufgrund des vorzugsweise aus hochfesten und formbeständigen Kunststoffen gefertigten Einsatzes und der Abstützrippen die Batteriezellen in den Aufnahmen festgelegt sind, sodass die in Abhängigkeit des elektrischen und thermischen Betriebszustandes auftretenden Schwankungen in der Zellengeometrie bzw. die Verformungen der Zellenkontur nicht kompensiert werden und dadurch sowohl die Batteriezellen als auch der

Kühlvorrichtungseinsatz mechanisch beschädigt werden können. Ein weiterer Nachteil besteht darin, dass bei derartigen Kühlvorrichtungen eine Kontaktierung der zellenbodenseitig, und damit im Bereich des negativen Zellenpols, unmittelbar in Kontakt mit dem Temperierfluid stehenden zylindrischen Batteriezellen entweder über ein leitfähiges Temperierfluid oder über einen, durch die Durchtrittsöffnung der Aufnahme hindurchragenden und mit dem negativen Zellenpol kontaktierten elektrischen Leiter erfolgen muss.

Zudem besteht aufgrund veränderlicher Zellenkonturen ein erhöhtes Risiko eines Temperierfluidaustritts aus dem Strömungskanal, weil sich die Passung und damit das Spaltmaß zwischen der Aufnahme und der darin eingesetzten Batteriezelle zufolge der betriebsbedingt auftretenden geometrischen Änderungen so verändern kann, dass das unter Druck stehende Temperierfluid über die Durchtrittsöffnungen aus dem Strömungskanal entweicht. Überhaupt müssen bei derartigen Kühlvorrichtungen zur grundsätzlichen Vermeidung eines Temperierfluidaustrittes aus dem Strömungskanal im Vorfeld Fertigungstoleranzen der Batteriezellen mitberücksichtigt werden, um das Spaltmaß zwischen den Aufnahmen und den darin eingesetzten Batteriezellen möglichst gering halten zu können.

### Darstellung der Erfindung

Der Erfindung liegt somit die Aufgabe zugrunde, eine Kühlvorrichtung der eingangs geschilderten Art so auszugestalten, dass bei geringem Fertigungsaufwand und hoher Temperierleistung eine betriebssichere Aufnahme der Batteriezellen ermöglicht wird, ohne dass im Vorfeld Fertigungstoleranzen der Batteriezellen mitberücksichtigt werden müssten.

Die Erfindung löst die gestellte Aufgabe dadurch, dass die Aufnahmen eine den Endabschnitt der Batteriezellen umschließende, fluiddichte Membran bilden, die zum Toleranzausgleich der einzelnen Batteriezellen verformbar ausgebildet ist und bei gefülltem Strömungskanal am Zellenboden anliegt.

Zufolge dieser Merkmale kann ein zuverlässiger Toleranzausgleich bei betriebsbedingt auftretender Geometrieänderung sowohl bezüglich der Zellenkonturschwankungen als auch bezüglich der relativen Lage der in den Aufnahmen gehaltenen Zellen zueinander erfolgen, während sich die Membran über den dem Zellenboden gegenüberliegenden und in Einsetzrichtung eine Anschlagbegrenzung für die Batteriezellen darstellenden Aufnahmeabschnitt aufgrund des eingestellten Systemdrucks und der damit auf die Membran wirkenden Kraftbeaufschlagung durch das Temperierfluid an den Zellenboden anlegt. Die den Endabschnitt der Batteriezellen umschließende, verformbare Membran kann entsprechend der auftretenden Formänderungen der Zellenkontur gestaucht oder gedehnt werden und sich so an die Zellenkontur anpassen, wobei sichergestellt ist, dass die Endabschnitte der Batteriezellen in den jeweiligen Aufnahmen sowohl umfangsseitig, als auch über den dem Zellenboden gegenüberliegenden Aufnahmeabschnitt sicher gehalten werden. Um einfache konstruktive Bedingungen und gleichzeitig eine zusätzliche toleranzausgleichende Verlagerung der Batteriezellen zueinander zu ermöglichen, kann der erfindungsgemäße Einsatz einstückig als Membran ausgebildet und im Sinne eines mehrere Aufnahmen aufweisenden Formenträgers ausgestaltet sein. Im Hinblick auf die Temperierung von zylindrischen Batteriezellen hat sich zudem gezeigt, dass durch einen ausschließlichen Wärmeaustausch über den Zellenboden bzw. über den Zellenendabschnitt im Vergleich zu hinlänglich bekannten Manteltemperierungskonzepten eine mindestens ebenso effiziente Temperierung erreicht werden kann. Um daher einen möglichst guten Wärmeübergang zwischen dem Temperierfluid und den von der fluiddichten Membran umschlossenen Zellenboden zu ermöglichen, ist die Membran wenigstens im Bereich des Zellenbodens entsprechend nachgiebig ausgebildet, damit sich diese bei gefülltem Strömungskanal zufolge des dabei vorherrschenden Systemdrucks am Zellenboden anlegt. Insbesondere erfolgt das Anlegen der Membran an den Zellenboden so, dass eine gegebenenfalls zwischen Membran und Zellenboden liegende und als zusätzlicher Isolator den Wirkungsgrad der Kühlungsvorrichtung beeinträchtigende Luftmasse durch die Membran weitgehend verdrängt wird. Obwohl für die erfindungsgemäße Membran die Materialwahl grundsätzlich so getroffen werden kann, dass diese ein plastisch-elastisches Verformungsverhalten zeigt, ergeben sich besonders günstige Bedingungen, wenn die Membran aus elastischen Materialien gefertigt wird, die reversibel und nahezu hysteresefrei deformierbar sind, sodass die Batteriezellen bei entsprechender Dimensionierung der Aufnahmen in diesen unter Vorspannung gehalten werden können. Gemäß einigen Ausführungsformen kann die Membran beispielsweise auf Silikonpolymeren oder thermoplastischen Elastomeren basieren, wobei die Materialstärke so gewählt werden muss, dass bei ausreichender mechanischer Stabilität der Wärmedurchgangswiderstand möglichst gering ausfällt. Demgemäß können auf derartigen Kunststoffen basierende Membrane zur Verbesserung der Wärmetransporteigenschaften zusätzlich additiviert sein. Aufgrund der erfindungsgemäßen Maßnahmen ist es zudem möglich, einerseits unterschiedliche Temperierfluide ungeachtet deren elektrischen Leitfähigkeit zu verwenden und andererseits die Batteriezellen mit abisoliertem Zellenmantel in die Aufnahmen einzusetzen, sodass die negative Kontaktierung über die an den Einsatz anschließenden, ausgesparten Zellenmantelabschnitte erfolgen kann. Damit im Falle einer über den Zellenboden ausgasenden Batteriezelle ein sicheres Abführen des anfallenden Reaktionsgases sichergestellt werden kann, besteht die Möglichkeit, die erfindungsgemäße Membran im Bereich des Zellbodens so auszugestalten, dass das Reaktionsgas in das Temperierfluid des Strömungskanals geleitet wird, beispielsweise indem die Membran an dieser Stelle eine Sollbruchstelle aufweist. Um die Temperierleistung weiter zu verbessern, kann die erfindungsgemäße Kühlungsvorrichtung gemäß weiteren Ausführungsformen im Strömungskanal angeordnete Strömungsleitelemente, beispielsweise Leitrippen, zur Turbulenzverstärkung umfassen.

Aufgrund unterschiedlicher elektrischer Betriebszustände sowie aufgrund unterschiedlicher konstruktiver Ausgestaltungen des Moduls können sich Modulbereiche bilden, die thermisch unterschiedlich stark beansprucht werden, was in weiterer Folge die Ausbildung unerwünschter Wärmestauzonen fördern und die Performance derartiger Module insgesamt vermindern kann.

Um daher die Ausbildung einer gleichmäßigen Temperaturverteilung im Modul zu begünstigen, wird vorgeschlagen, dass die einzelnen Aufnahmen voneinander abweichende Wärmewiderstände aufweisen. Dies kann beispielsweise dadurch erreicht werden, dass die Aufnahmen im Bereich des Zellbodens eine thermische Isolationsschicht aufweisen oder dass die Aufnahmen, insbesondere für den Fall einstückig ausgebildeter Einsätze, unterschiedliche Materialstärken aufweisen. Dementsprechend können Modulbereiche mit thermisch stärker beanspruchten Zellen Aufnahmen mit geringerer Materialstärke aufweisen.

Um eine konstante Wärmeabfuhr innerhalb des Moduls zu erzielen, können die Aufnahmen bei in gleicher Ebene ausgerichteten Zellenböden unterschiedliche Aufnahmetiefen umfassen. Dies bedeutet, dass die im Regelfall als Zellverbund mit konstanter Höhe und bezüglich ihrer zellkopfseitigen Kontaktierungsebene gleichmäßig ausgerichteten Batteriezellen mit ihren jeweiligen zellenbodenseitigen Endabschnitten so von den Aufnahmen umschlossen werden, dass die Größe der mit den jeweiligen Zellenendabschnitten in Kontakt stehende Wärmeübertragungsfläche der Aufnahmen unterschiedlich ausfällt. Beispielsweise kann dies gemäß einigen Ausführungsformen auf einfache Weise dadurch erreicht werden, dass der die Membran bildende Einsatz als gegenüber der zellkopfseitigen Kontaktierungsebene im Wesentlichen konkav oder konvex gewölbter bzw. abschnittsweise linear ansteigender bzw. abfallender Formenträger ausgestaltet ist, wobei der jeweilige Wölbungsverlauf davon abhängt, wo sich thermisch stärker oder weniger stark beanspruchte Batteriezellen innerhalb des Moduls bzw. des Zellverbunds befinden. Bei konkavem Wölbungsverlauf weisen demnach die randseitig angeordneten gegenüber den im Zellverbund mittig angeordneten Batteriezellen eine geringere Wärmeübertragungsfläche zu ihren jeweiligen Aufnahmen auf, wohingegen dies bei konvexem Wölbungsverlauf genau umgekehrt ist.

Um eine sichere Positionierung sowie einen sicheren Halt der Batteriezellen in den Aufnahmen zu ermöglichen, wird vorgeschlagen, dass die Batteriezellen in die Aufnahmen eingeklebt sind. Besonders günstige Bedingungen ergeben sich beispielsweise, wenn die Klebung über eine in die Aufnahmen eingebrachte, adhäsive Wärmeleitpaste erfolgt.

Die Erfindung bezieht sich auch auf einen Träger für zu einem Modul zusammengesetzte Batteriezellen mit einer erfindungsgemäßen Kühlvorrichtung, wobei die an den Einsatz anschließenden, ausgesparten Zellenabschnitte wenigstens teilweise in eine Vergussmasse eingebettet sind. Zufolge dieser Merkmale kann trotz der nachgiebigen Membran der Kühlvorrichtung unabhängig vom vorherrschenden Systemdruck ein sicherer Sitz und eine ausreichende mechanische Stabilität der Batteriezellen bei geringem Fertigungsaufwand erreicht werden. Die ausgesparten Zellenabschnitte werden dabei in ihrer Position innerhalb des Moduls zumindest in radialer Richtung der eingesetzten Batteriezellen so festgelegt, dass sich diese in assemblierten Zustand zueinander nicht verschwenken können. Um dennoch einen Toleranzausgleich der eingebetteten Batteriezellen zu ermöglichen, kann die Vergussmasse in vorteilhafter Weise so gewählt werden, dass diese im ausgehärteten Zustand eine ausreichende Nachgiebigkeit gegenüber den schwankenden Zellenkonturen aufweist. In vorteilhafter Weise ergibt sich zufolge dieser konstruktiven Maßnahmen zudem ein effizienterer Assembliervorgang, weil die Batteriezellen, ohne zuvor hinsichtlich der Zellengeometrie vorsortiert werden zu müssen, in den Einsatz gesteckt werden, wonach der Strömungskanal mit Systemdruck beaufschlagt wird und anschließend der Träger mit Vergussmasse verfüllt und somit die ausgesparten Zellenabschnitte darin eingebettet und die Batteriezellen in ihrer Position stabilisiert werden.

### Kurze Beschreibung der Erfindung

In der Zeichnung ist der Erfindungsgegenstand beispielsweise dargestellt. Es zeigen
- Fig. 1: Eine schematische Schnittansicht eines Trägers für zu einem Modul zusammengesetzte Batteriezellen mit einer erfindungsgemäßen Kühlvorrichtung und
- Fig. 2: einen Schnitt entlang der Linie II - II der Fig. 1 in einem kleineren Maßstab.

Wege zur Ausführung der Erfindung

Eine erfindungsgemäße Kühlvorrichtung für einzelne, zu einem Modul zusammengesetzte Batteriezellen 1,2 weist einen Grundkörper 3 und einen Einsatz 4 auf. Der Einsatz 4 umfasst Aufnahmen 5 für einen Endabschnitt 6 der Batteriezellen 1,2, wobei der Zellenkopf 7 ausgespart bleibt. Gemeinsam mit dem Grundkörper 3 bildet der Einsatz 4 einen Strömungskanal 8 für ein Temperierfluid.

Die Aufnahmen 5 bilden eine den Endabschnitt 6 der Batteriezellen 1,2 umschließende, fluiddichte Membran 9, die zum Toleranzausgleich der einzelnen Batteriezellen 1,2 verformbar ausgebildet ist. Bei gefülltem Strömungskanal 8 legt sich die Membran 9 zufolge des vorherrschenden Systemdrucks am Zellenboden 10 an.

Gemäß besonders günstiger Ausführungsvarianten kann der Einsatz 4 einstückig als eine mehrere Aufnahmen 5 aufweisende Membran 9 im Sinne eines Formenträgers ausgebildet sein.

Die erfindungsgemäße Kühlvorrichtung ist auf einem Träger 11 angeordnet, der einen von den Batteriezellen 1, 2 durchsetzten Trägerrahmen 12 aufweist. Die Kontaktierung der einzelnen Batteriezellen 1,2 kann beispielsweise über geschälte Zellmantelabschnitte 13, also Zellmantelabschnitte 13 mit abisoliertem Zellmantel, sowie über eine zellkopfseitige Kontaktierungsebene 14 erfolgen.

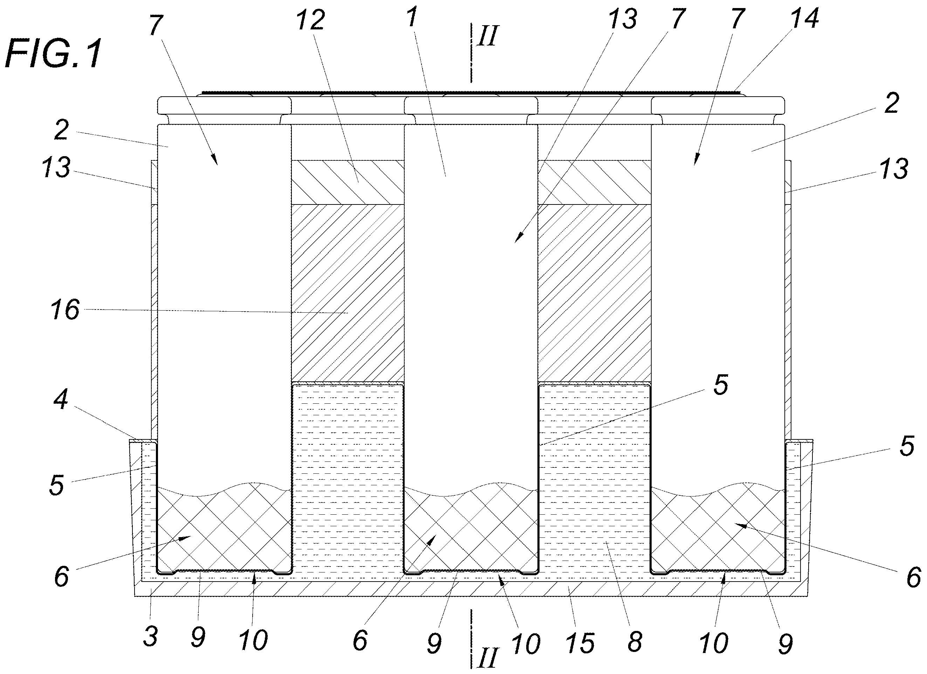

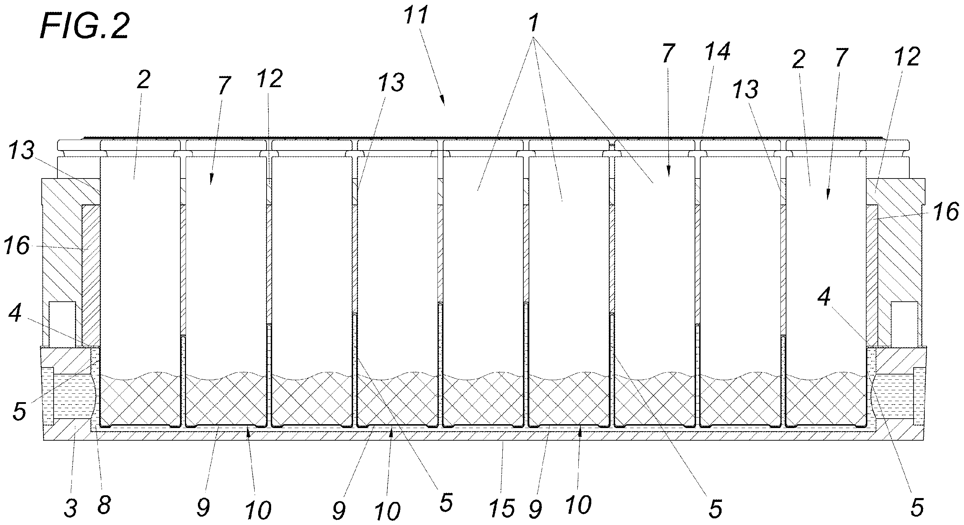

Die Aufnahmen 5 weisen in einer Ausgestaltungsform bei in gleicher Ebene ausgerichteten Zellenböden 10 unterschiedliche Aufnahmetiefen auf, wie dies aus den Fig. 1 und 2 hervorgeht. Dies kann beispielsweise dadurch erreicht werden, dass der die Membran 9 bildende Einsatz 4 gegenüber der zellkopfseitigen Kontaktierungsebene 14 konkav bzw. gegenüber dem Boden 15 des Grundkörpers 3 konvex gewölbt ist. Zufolge dieser Ausgestaltungsvariante des Einsatzes 4 steht den in der Mitte des Trägers 11 angeordneten Batteriezellen 1 eine größere Wärmeübertragungsfläche der Membran 4 zur Verfügung als den in den Randbereichen des Trägers 11 angeordneten Batteriezellen 2, wie dies in der Fig. 2 zu erkennen ist.

Die ausgesparten, an den Einsatz 4 anschließenden Zellmantelabschnitte 13 der Batteriezellen 1,2 sind in der in den Fig. 1 und 2 gezeigten Ausführungsform in eine Vergussmasse 16 eingebettet.

## Patentansprüche

1. Kühlvorrichtung für zu einem Modul zusammengesetzte Batteriezellen (1, 2), mit einem Grundkörper (3) und einem Einsatz (4), der Aufnahmen (5) für einen Endabschnitt (6) der Batteriezellen (1, 2) unter Aussparung des Zellenkopfes (7) aufweist, wobei der Einsatz (4) gemeinsam mit dem Grundkörper (3) einen Strömungskanal (8) für ein Temperierfluid begrenzt, **dadurch gekennzeichnet, dass** die Aufnahmen (5) eine den Endabschnitt (6) der Batteriezellen (1, 2) umschließende, fluiddichte Membran (9) bilden, die zum Toleranzausgleich der einzelnen Batteriezellen (1, 2) verformbar ausgebildet ist und bei gefülltem Strömungskanal (8) am Zellenboden (10) anliegt.

2. Kühlvorrichtung nach Anspruch 1, **dadurch gekennzeichnet, dass** die einzelnen Aufnahmen (5) voneinander abweichende Wärmewiderstände zur Ausbildung einer gleichmäßigen Temperaturverteilung im Modul aufweisen.

3. Kühlvorrichtung nach Anspruch 1 oder 2, **dadurch gekennzeichnet, dass** die Aufnahmen (5) bei in gleicher Ebene ausgerichteten Zellenböden (10) unterschiedliche Aufnahmetiefen umfassen.

4. Kühlvorrichtung nach einem der Ansprüche 1 bis 3, **dadurch gekennzeichnet, dass** die Batteriezellen (1, 2) in die Aufnahmen (5) eingeklebt sind.

5. Träger (11) für zu einem Modul zusammengesetzte Batteriezellen (1, 2) mit einer Kühlvorrichtung nach einem der vorangegangenen Ansprüche, **dadurch gekennzeichnet, dass** die an den Einsatz (4) anschließenden, ausgesparten Zellenabschnitte wenigstens teilweise in eine Vergussmasse (16) eingebettet sind.

## Claims

1. Cooling device for battery cells (1, 2) assembled to form a module, comprising a base body (3) and an insert (4) which has receptacles (5) for an end portion (6) of the battery cells (1, 2), excepting the cell head (7), wherein the insert (4) together with the base body (3) delimits a flow channel (8) for a temperature-control fluid, **characterised in that** the receptacles (5) form a fluid-tight membrane (9) which encloses the end portion (6) of the battery cells (1, 2), is designed to be deformable for tolerance compensation of the individual battery cells (1, 2) and, when the flow channel (8) is filled, rests against the cell bottom (10).

2. Cooling device as claimed in claim 1, **characterised in that** the individual receptacles (5) have differing thermal resistances for forming a uniform temperature distribution in the module.

3. Cooling device as claimed in claim 1 or 2, **characterised in that** the receptacles (5) comprise different receptacle depths when the cell bottoms (10) are aligned in the same plane.

4. Cooling device as claimed in any one of claims 1 to 3, **characterised in that** the battery cells (1, 2) are bonded into the receptacles (5).

5. Carrier (11) for battery cells (1, 2) which are assembled to form a module, wherein the carrier (11) has a cooling device according to any one of the preceding claims, **characterised in that** the excepted cell portions adjoining the insert (4) are at least partially embedded in a casting compound (16).

## Revendications

1. Dispositif de refroidissement pour des cellules de batterie (1, 2) assemblées en un module, avec un corps de base (3) et un insert (4) qui présente des réceptacles (5) pour un segment d'extrémité (6) des cellules de batterie (1, 2) laissant la tête des cellules (7) dégagée, dans lequel l'insert (4) délimite avec le corps de base (3) un canal d'écoulement (8) pour un fluide de thermostabilisation, **caractérisé en ce que** les réceptacles (5) forment une membrane étanche aux fluides (9) entourant le segment d'extrémité (6) des cellules de batterie (1, 2) qui est conçue de façon déformable pour la compensation des tolérances des différentes cellules de batterie (1, 2) et repose sur le fond des cellules (10) lorsque le canal d'écoulement (8) est rempli.

2. Dispositif de refroidissement selon la revendication 1, **caractérisé en ce que** les différents réceptacles (5) présentent des résistances thermiques différentes entre elles pour la création d'une distribution de température homogène dans le module.

3. Dispositif de refroidissement selon la revendication 1 ou 2, **caractérisé en ce que** les réceptacles (5) possèdent des profondeurs de réception différentes avec des fonds de cellule (10) orientés dans un même plan.

4. Dispositif de refroidissement selon une des revendications 1 à 3, **caractérisé en ce que** les cellules de batterie (1, 2) sont collées dans les réceptacles (5).

5. Support (11) pour des cellules de batterie (1, 2) assemblées en un module avec un dispositif de refroidissement selon une des revendications précédentes, **caractérisé en ce que** les segments de cellule dégagés voisinant avec l'insert (4) sont au moins partiellement encastrés dans une masse coulée (16).
